(19) Europäisches Patentamt
European Patent Office
Office européen des brevets

(11) **EP 3 683 928 B1**

(12) **EUROPEAN PATENT SPECIFICATION**

(45) Date of publication and mention
of the grant of the patent:
**22.04.2026  Bulletin 2026/17**

(51) International Patent Classification (IPC):
**H02K 1/14** (2006.01)      **H02K 19/06** (2006.01)

(21) Application number: **19215461.5**

(52) Cooperative Patent Classification (CPC):
**H02K 1/148; H02K 19/06**

(22) Date of filing: **12.12.2019**

(54) **ELECTROMECHANICAL SYSTEM**

ELEKTROMECHANISCHES SYSTEM

SYSTÈME ÉLECTROMÉCANIQUE

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **15.01.2019  GB 201900536**

(43) Date of publication of application:
**22.07.2020  Bulletin 2020/30**

(73) Proprietor: **Rolls-Royce plc**
**London N1 9FX (GB)**

(72) Inventors:
• **Chong, Ellis**
**Derby, Derbyshire DE24 8BJ (GB)**

• **Smith, Alexander**
**Derby, Derbyshire DE24 8BJ (GB)**
• **Zhou, Yuanpeng**
**Derby, Derbyshire DE24 8BJ (GB)**

(74) Representative: **Rolls-Royce plc**
**Moor Lane (ML-9)**
**PO Box 31**
**Derby DE24 8BJ (GB)**

(56) References cited:
**EP-A1- 0 909 010      WO-A1-2008/119055**
**CN-A- 101 699 713      US-A1- 2018 152 060**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

FIELD OF THE DISCLOSURE

The present disclosure relates to a stator segment and a segmented stator. In particular, the present disclosure relates to a stator segment for use with a toothed rotor for e.g. the production of electricity from rotation of the toothed rotor.

BACKGROUND

Electromechanical systems, such as electrical generators and motors, are generally formed of a stator and a rotor that rotates with respect to the stator. Both generators and motors operate by way of an interaction between a magnetic field and an electrical current passing through a winding.

In motors, a current is supplied to the winding and interaction between the winding and the magnetic fields results in an electromagnetic force, which causes rotation of the rotor. In generators, rotation of the rotor (i.e. as a result of an external force) results in interaction between the magnetic field in the winding (e.g. due to relative movement therebetween) so as to generate a current in the winding. For example, in the case of a generator, the rotor may be cylindrical and formed of laminated steel. The generator may include a field winding or permanent magnets for the purpose of generating a magnetic field. The stator may be tubular and formed of laminated steel, and may house an output winding, for example, composed of a plurality of coils embedded in slots cut into an inner periphery of the stator.

In typical generators/motors the stator is a continuous structure encircling the entire circumference of the rotor. In some environments this can make it difficult to access internal portions of the stator and other parts of the generator/motor that are enclosed by the stator. For example, maintenance and/or repair of the stator may require removal of the stator axially with respect to the rotor. Where the motor/generator forms part of e.g. an engine, this can necessitate significant disassembly of the engine. For example, pipes, harnesses and structural components may need to be removed to access a motor/generator for maintenance or repair.

Continuous annular stators can also take up significant space around a rotor. This can make it difficult to locate generators/motors having such stators in environments where space is limited (e.g. turbine gas engines).

There is a need to provide a stator that alleviates these issues.

United States Patent Application Publication US 2018/0152060 A1 describes a double-U core switched reluctance electrical machine. The machine comprises a plurality of stator segments, each segment comprising a first U-core and a second U-core wound with a winding. The winding is arranged with at least one coil turn, each coil turn comprising a first axial coil segment and a second axial coil segment. The first and second axial coil segments are arranged in opposite directions to each other. The first U-core receives the first axial coil segment and the second U-core receives the second axial coil segment. The first and second U-cores are located adjacent to each other, whereby the winding spans the first and second U-cores.

Chinese Patent Application Publication CN 101699713 A describes a flux switching motor comprising a plurality of salient pole stators. A permanent magnet is embedded in a gap between every two salient pole stators. An armature winding is wound on two salient pole stator arms connected with permanent magnets. An electro-magnetic winding is wound on the permanent magnets in a vertical direction of the armature winding. The excitation directions of adjacent permanent magnets are opposite.

International Patent Application Publication WO 2008/119055 A1 relates to a permanent magnet electromechanical device. The device uses control coils to steer magnetic flux of permanent magnets between stator segments. The control coils can be wound around the bridge of a stator segment, the poles of a stator segment or both.

European Patent Application Publication EP 0909010A1 relates to an electrical machine with flux commutation.

SUMMARY

The scope of protection is defined in the appended claims.

In a first aspect, there is provided an electromechanical system comprising a toothed rotor comprising a plurality of circumferentially spaced teeth; and a segmented stator comprising multiple separable stator segments each extending partway about the circumference of the rotor, wherein at least one of the stator segments comprises: an armature coil defining a coil interior; circumferentially adjacent first and second stator portions, each of the first and second stator portions comprising circumferentially adjacent connected inner and outer radially extending poles, each of the inner poles passing through the coil interior and each of the outer poles provided outside of the coil interior; and a bridge connecting the first and second the stator portions, the bridge comprising a magnetic field generator arranged to generate a magnetic field between the stator portions, the magnetic field generator spaced radially from the coil interior. The bridge comprises a circumferentially extending central portion and outer portions that extend radially inwardly at opposing ends of the central portion so as to connect the central portion to the first and second stator portions. A T-shaped recess is defined between the first stator portion, the second stator portion and the bridge.

Accordingly, it may be possible to remove one or more stator segments from the electromechanical system so that the rotor can be removed in a radial direction without having to remove the entire stator. Thus, it is no longer necessary to remove the rotor in the axial direction.

Such a stator segment (which forms part of a segmented stator, within which each stator segment is a distinct separate structural entity, separable from other segments of the segmented stator and extending only partway about the circumference of a rotor in use) may combine to form an improved segmented stator which provides better serviceability than a typical (i.e. single-piece annular) stator that comprises a single unbroken structure which extends for the entire circumference of a rotor. That is, such stator segments can be part of a segmented stator comprising multiple separable stator segments, one or more of which may be individually removeable without interfering with or needing to move any of its neighbouring stator segments, thus allowing easier access to a rotor about which the segmented stator extends (e.g. for repair and maintenance). The stator segment may, for example, not need to be removed from the rotor in an axial direction (as may otherwise be the case with single-piece annular shaped stators). Additionally, a segmented stator made up of separable stator segments may take up less space (e.g. in a turbine engine) than a single-piece annular stator. This space may therefore be used for other components (e.g. of the turbine engine).

When used with a toothed rotor, the stator segment is able to provide an electrical current (e.g. alternating current (AC)). This electrical current is a result of electromagnetic induction caused by changes in the magnetic field that is generated by the magnetic field generator. As will be described in further detail below, these changes in magnetic field are a result of the poles of each stator portion defining a first magnetic path that interacts with the coil (i.e. that passes through the coil interior) and a different, second, magnetic path that doesn't interact with the coil (i.e. that passes outside of the coil interior). As the rotor rotates, the teeth of the rotor align with (and thus magnetically interact with) different poles of the stator segment such that (dependent on the poles aligned with rotor teeth) the magnetic field passing through the coil interior changes direction.

Optional features of the present invention are now described, unless explicitly indicated that those are comparative examples (or aspects, embodiments) not covered by the present invention. These are applicable singly or in any combination with any aspect.

In some embodiments the magnetic field generator may comprise an excitation in the form of a field coil. A current (e.g. direct current (DC)) may be passed through the field coil to generate a magnetic field. For example, a larger current in the field coil may result in a larger AC current output from the armature coil. In this respect, the field coil may control the (e.g. AC) voltage output of the armature coil.

The field coil may be wound around at least a portion of the bridge. The field coil may be oriented generally perpendicularly to the armature coil. That is, a centrally extending axis of the field coil may be oriented generally perpendicularly to a centrally extending axis of the field coil.

In a comparative example, not covered by the present invention, the field coil may have a thickness (in the radial direction) that is substantially the same as a length (in the radial direction) of the inner poles. In this respect, where a recess is formed between the inner poles, the portion of the field coil between the inner poles may substantially fill the recess.

The term "radial" is used herein to describe a direction that is generally parallel to the radius of a rotor having a centre of rotation, when the rotor is used with the stator. Similarly, the term "circumferential" is used to describe a direction about the centre of rotation of the rotor when used with the stator; the circumferential direction may extend generally parallel to a circumference of the stator (and perpendicular to the radial direction).

The magnetic field generator may alternatively or additionally comprise a permanent magnet. In this respect, the magnetic field generator may be a hybrid system. The permanent magnet may be oriented so as to be perpendicular to the armature coil. For example, an axis extending between the north and south poles of the permanent magnet may be perpendicular to a centrally extending axis of the armature coil. The magnetic field generator may comprise a plurality of permanent magnets.

The armature coil is wound around the inner poles. Recesses may be defined between the inner and outer poles of each stator portion. Opposing ends of the armature coil may be located in the recesses defined between the inner and outer poles. In this respect an inner surface (or inner surfaces) of the armature coil may contact respective outer surfaces of the inner poles. The armature coil may be spaced from the outer poles. That is, there may be an air gap in the recess between the armature coil and the outer poles. The poles extend (i.e. inwardly) in a substantially radial direction of the stator segment. In this way, distal ends of the poles (i.e. distal from their connections with one another/distal from the connection portions) may align with teeth of a rotor in use.

Each stator portion may be generally U-shaped. In this respect, the poles of each stator portion may form legs of the U shape of the stator portion.

Each stator portion may be integrally formed and may be formed of a ferrous material. For example, each stator portion may be formed of iron. The stator portions and bridge may be integrally or separately formed. The bridge may be formed of a ferrous material (e.g. iron).

In a comparative example, not covered by the present invention, a portion of the magnetic field generator may be located in the coil interior. In a comparative example, not covered by the present invention, at least one of the north or south poles of the magnetic field generated by the magnetic field generator may be located in the coil interior. In a comparative example, not covered by the present invention, both of the north and south poles of the magnetic field generated by the magnetic field generator may be located in the coil interior.

The magnetic field generator is spaced from the coil interior. That is, both of the north and south poles of the magnetic field generated by the magnetic field generator may be spaced from the coil interior. The magnetic field generator (i.e. including the north and south poles of the magnetic field) may be spaced radially from the coil interior. In use, one or more stator segments disclosed herein may be arranged radially outwards from the centre of rotation of a rotor.

The rotor may have no excitation (e.g. magnetic field generator) mounted thereon. That is, the magnetic field of the system may solely be a result of the magnetic field generator of the stator segment.

In some embodiments the poles of the stator segment may be arranged such that, when the rotor is in a first position, the inner pole of the first stator portion is aligned with a tooth of the rotor, and the inner pole of the second stator portion is aligned with an air gap. The poles of the stator segment may further be arranged such that, when the rotor is in a second position, the inner pole of the second stator portion is aligned with a tooth of the rotor, and the inner pole of the first stator portion is aligned with an air gap.

In this way, in the first position, the inner pole of the first stator portion may magnetically interact with the rotor. Thus, a magnetic path may be defined between the rotor and the magnetic field generator of the stator via the inner pole of the first stator portion. Conversely, the air gap may prevent magnetic interaction between the inner pole of the second stator portion and the rotor.

In the second position, a magnetic path may be defined between the rotor and the magnetic field generator via the inner pole of the second stator portion (and there may not be any magnetic interaction between the rotor and the inner pole of the first static portion due to the air gap).

In some embodiments the poles of the stator segment may be arranged such that, when the rotor is in the first position, the outer pole of the second stator portion is aligned with a tooth of the rotor, and the outer pole of the first stator portion is aligned with an air gap. The poles of the stator segment may further be arranged such that when the rotor is in a second position, the outer pole of the first stator portion is aligned with a tooth of the rotor, and the outer pole of the second stator portion is aligned with an air gap.

Thus, in the first position, a magnetic path may be formed between the rotor and the magnetic field generator via the outer pole of the second stator portion. Similarly, in the second position, a magnetic path may be formed between the rotor and the magnetic field generator via the outer pole of the first portion.

In other words, two different magnetic paths may be formed in the two positions of the rotor. In each position the magnetic path passes between the stator and the rotor at an inner pole of one stator portion and the outer pole of the other stator portion. These two different magnetic paths pass through the coil interior (of the armature coil) in different directions. One path passes in a generally radially outward direction and the other path passes in a generally radially inward direction. This change in direction of the magnetic field, as the rotor rotates, results in the electromagnetic induction of the armature coil.

The dimensions of the stator segment may be determined by way of the following equation:

$$ b_{ss} + 2b_{ts} + h_m = \frac{D_{si}}{P} \cdot \pi $$

In which:

P is the number of rotor poles;
$D_{si}$ is the stator inner diameter;
$b_{ss}$ is the distance between the inner and outer poles of each stator portion;
$b_{ts}$ is the width of each pole; and
$h_m$ is the distance between the stator portions.

In other words, the circumferential spacing of the poles may be half of the spacing of the rotor teeth such that the teeth of the rotor align with every second pole of the stator segment.

The plurality of stator segments may be spaced circumferentially about the rotor. Alternatively, or additionally, the stator segments may be aligned circumferentially, but spaced axially with respect to the rotor.

The electromechanical system may be an electrical generator. The electrical generator may be for generating electricity in a gas turbine engine.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

BRIEF DESCRIPTION OF THE DRAWINGS

Embodiments will now be described by way of example only with reference to the accompanying drawings in which:

Figures 1A and 1B are schematics showing a first example electromechanical system, not within the scope of the appended claims;

Figure 2 is a schematic of a second example electromechanical system, in accordance with the appended claims;

Figure 3 is a schematic of a third example electromechanical system, not within the scope of the appended claims;

Figure 4 is a schematic of a fourth example electromechanical system, not within the scope of the appended claims;

Figure 5 shows a schematic of an electromechanical system comprising a segmented stator comprising multiple stator segments surrounding a rotor.

DETAILED DESCRIPTION OF THE DISCLOSURE

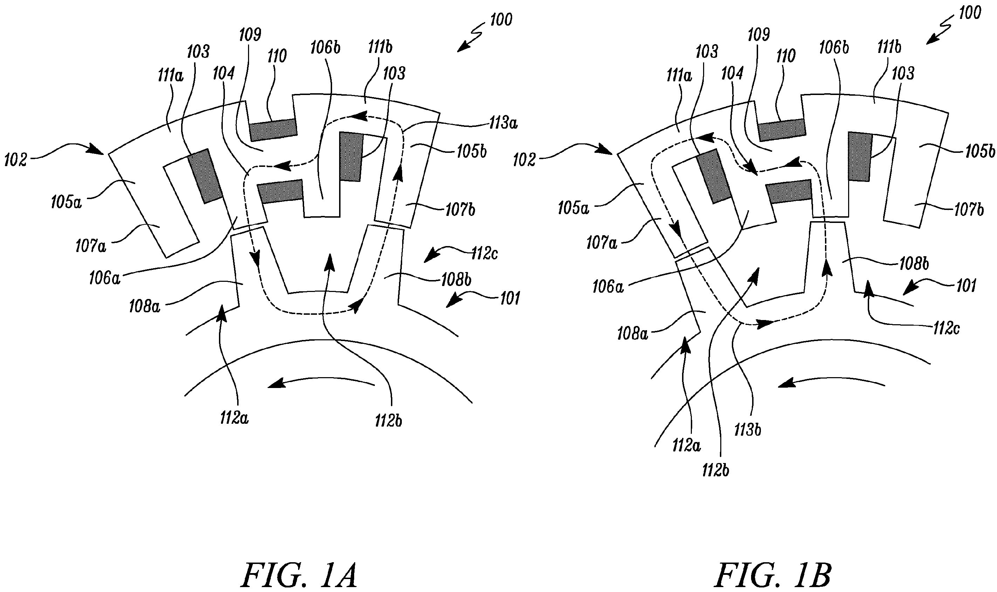

An electromechanical system 100, not within the scope of the appended claims, is illustrated in Figure 1A and 1B is an electrical generator, which comprises a toothed rotor 101 and a single structurally separated stator segment 102 of a segmented stator, the stator segment extending partway about the circumference of the rotor 101.

The stator segment 102 comprises an armature coil 103 defining a coil interior 104 and first 105a and second 105b spaced (generally U-shaped, generally ferrous) stator portions. Each stator portion 105a, 105b comprises connected inner 106a, 106b and outer 107a, 107b radially extending poles for magnetic interaction with teeth 108a, 108b of the rotor 101. As is apparent from the figures, the inner pole 106a, 106b of each stator portion 105a, 105b passes through the coil interior 104, and the outer pole 107a, 107b of each stator portion 105a, 105b is provided outside of the coil interior 104. The stator segment further comprises a bridge 109 connecting (and integrally formed with) the stator portions 105a, 105b. The bridge 109 comprises a magnetic field generator, in the form of a field coil 110, arranged to generate a magnetic field between the second stator portion 105b and the first stator portion 105a. The rotor 101 does not have any excitation mounted thereon.

As will be described in further detail below, the stator segment 102 and circumferentially-spaced teeth 108a, 108b of the toothed rotor 101 interact to produce an alternating current in the armature coil 103 (i.e. by way of electromagnetic induction). Although only two teeth 108a, 108b are shown, it should be appreciated that the rotor 101 comprises a plurality of teeth evenly spaced about its circumference.

The bridge 109 extends in a substantially circumferential direction (i.e. generally parallel to a circumference of the rotor 101) between the inner poles 106a, 106b so as to connect the armature portions 105a, 105b. In particular, the bridge 109 may be connected to a central portion of each inner pole 106a, 106b (i.e. each opposing end of the bridge 109 is connected to a respective inner pole 106a, 106b at a portion of the inner pole 106a, 106b that is centrally located with respect to a longitudinal axis of the inner pole 106a, 106b).

This arrangement of the bridge 109 results in recesses being defined between the inner poles 106a, 106b and either side of the bridge 109. The field coil 110 is wound around the bridge 109 so as to be received in the recesses. The width of the field coil 110 (i.e. in the circumferential direction of the stator segment/rotor) is substantially the same as the length of the bridge 109 (again, in the circumferential direction) such that the field coil 110 extends substantially across a width of the recesses.

The orientation of the field coil 110 (wound around the bridge 109 so as to be perpendicular to the armature coil 103) is such that, when a current (e.g. a DC current) is passed through the field coil 110, a magnetic field is generated which has a direction extending from the second armature portion 105b to the first armature portion 105a. That is, the filed coil 110 generates a magnetic field that has a north pole at an end of the bridge 109 proximate the second armature portion 105b and a south pole at an end of the bridge 109 proximate the first armature portion 105a. As will be described further below, it is this magnetic field that induces a current in the armature coil 103 and, in this respect, the current (DC current) passed through the field coil 110 can be used to control the current (AC current) induced in the armature coil 103.

The armature coil 103 is wound around the inner poles 106a, 106b such that it is oriented generally perpendicularly to the field coil 110. In this respect, opposing ends of the armature coil 103 are located in recesses defined between the inner 106a, 106b and outer poles 107a, 107b of each stator portion 105a, 105b. Thus, inner surfaces of the armature coil 103 contact respective outer surfaces of the inner poles 106a, 106b, whilst outer surfaces of the armature coil 103 are spaced from the outer poles 107a, 107b (such that there is an air gap between the armature coil 103 and the outer poles 107a, 107b).

The arrangement of the armature coil 103 and field coil 110 is such that the field coil 110 passes through the coil interior 104 of the armature coil 103. As a result, the north and south poles of the magnetic field generated by the field coil 110 are located in the coil interior 104.

The poles 106a, 106b, 107a, 107b extend inwardly in a substantially radial direction of the stator segment 102. In this way, ends of the poles 106a, 106b, 107a, 107b (proximate the rotor 101) may align with the teeth 108a, 108b of the rotor 101. Each pair of inner and outer poles 106a, 106b, 107a, 107b is connected by connecting portions 111a, 111b that extend circumferentially between the poles 106a, 106b, 107a, 107b.

As is apparent, in use, the rotor 101 undergoes rotation (in this case, in a counter-clockwise direction). In practice, this will be in the form of a continuous rotation. For the purpose of explaining the operation of the system 100, Figure 1A shows the rotor 101 in a first position, whilst Figure 1B shows the rotor 101 in a second position (in which the rotor 101 has been rotated counter-clockwise. Rotation of the rotor 101 between the two positions results in different alignments of the teeth 108a, 108b and air gaps 112a, 112b, 112c (defined between the teeth) with the poles 106a, 106b, 107a, 107b.

In the first position, the inner pole 106a of the first stator portion 105a is aligned with a tooth 108a of the rotor 101, and the inner pole 106b of the second stator portion 105b is aligned with an air gap 112b. Similarly, in the first position, the outer pole 107b of the second stator portion 105b is aligned with another tooth 108b of the rotor 101, and the outer pole 107a of the first stator portion 105a is aligned with an air gap 112a.

In this way, in the first position, the inner pole 106a of the first stator portion 105a and outer pole 107b of the second stator portion 105b magnetically interact with the rotor 101. Conversely, the air gaps 112a, 112b prevent magnetic interaction of the inner pole 106b of the second stator portion 105b and outer pole 107a of the first stator portion 105a with the rotor. Thus, a magnetic field is formed between the rotor 101 and the field coil 110 of the stator segment 102 via the inner pole 106a of the first stator portion 105a and outer pole 107b of the second stator portion 105b. In the present figure, that magnetic field is illustrated by way of a magnetic path 113a.

In the second position (Figure 1B) the inner pole 106b of the second stator portion 105b is aligned with a tooth 108b of the rotor 101, and the inner pole 106a of the first stator portion 105a is aligned with an air gap 112b. The outer pole 107a of the first stator portion 105a is aligned with a tooth 108a of the rotor 101, and the outer pole 107b of the second stator portion 105b is aligned with an air gap 112c.

Hence, in the second position, a magnetic field (i.e. illustrated by way of magnetic path 113b) is defined between the rotor 101 and the field coil 110 via the inner pole 106b of the second stator portion 105b and the outer pole 107a of the first stator portion 105a.

As should be apparent, the two positions of the rotor 101 result in two different magnetic paths 113a, 113b. Due to the orientation of the field coil 110, both magnetic paths 113a, 113b extend in a generally counter-clockwise direction. The paths 113a, 113b, however, pass through the coil interior 104 of the armature coil 103 in different directions. In the first position, the magnetic path 113a passes through the coil interior 104 in a generally radially inward direction. In the second position, the magnetic path 113b passes through the coil interior 104 in a generally radially outward direction. This change in the magnetic field between the two positions of the rotor results in the induction of an alternating voltage in the armature coil 103.

It is the alignment of different pairs of the poles 106a, 106b, 107a, 107b with the teeth 108a, 108b of the rotor 101 that leads to this changing magnetic field. To allow for this alignment, the poles 106a, 106b, 107a, 107b have a circumferential spacing that is approximately half of the spacing of the teeth 108a, 108b of the rotor 101.

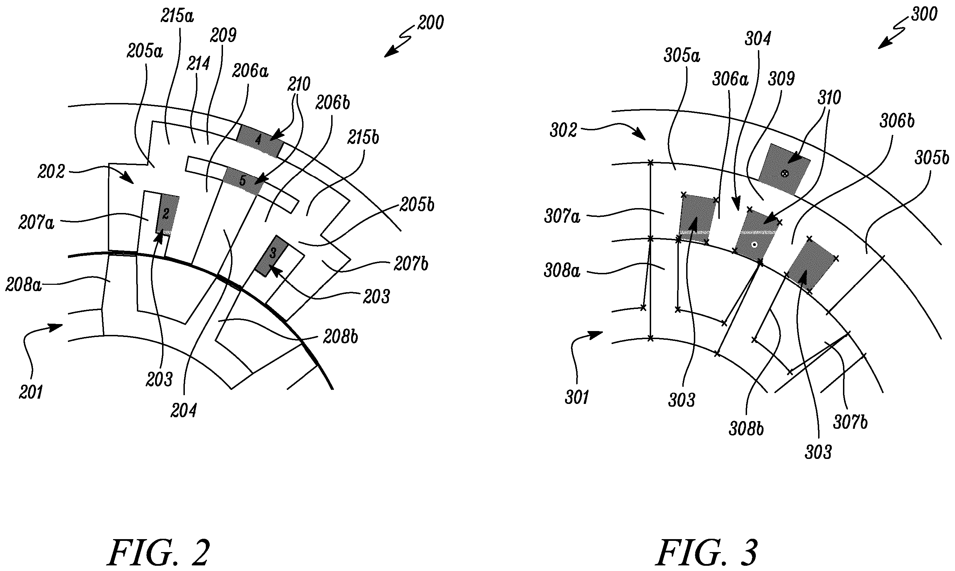

Figure 2, which is in accordance with the appended claims, shows a second electromechanical system 200. This system 200 is similar to the system 100 shown in Figure 1A and 1B, and for that reason, corresponding reference numerals have been used.

The system 200 differs from that described above in that the bridge 209 does not extend between the inner poles 206a, 206b. Rather, the bridge 209 comprises a circumferentially extending central portion 214 and outer portions 215a, 215b that extend radially inwardly at opposing ends of the central portion 214 so as to connect the central portion 214 to the stator portions 205a, 205b. In this embodiment, a T-shaped recess is defined between the stator portions 205a, 205b and the bridge 209, and the field coil 210 extend through this T-shaped recess and is wound around the central portion 214 of the bridge 209.

Like the previously described embodiment, the armature coil 203 is wound around the inner poles 206a, 206b, such that (in the illustrated embodiment) the bridge 209 is radially spaced from the coil interior 204 of the armature coil 203. Thus, the field coil 210 does not overlap with the armature coil 203. This can, in some cases, make it easier to manufacture and to thermally manage the system 200. For example, the field coil 210 could be wound over a larger surface area (i.e. due to the length of the bridge), which may allow a greater surface area for heat transfer to the surrounding air.

The system 300 of Figure 3, not within the scope of the appended claims, is, again, similar to those described above. In this system 300, however, the bridge 309 extends between the inner poles 306a, 306b at radially outer portions of the inner poles 306a, 306b. Further, the recess defined between the stator portions 305a, 305b has a similar shape and size to a transverse profile of the field coil 310 such that the field coil 310 substantially fills the recess. Similarly, the recesses defined between the inner 306a, 306b and outer 307a, 307b poles of each stator portion 305a, 305b have a similar shape and size to a transverse profile of the armature coil 303 such that the armature coil 303 substantially fills these recesses. The field coil 310 is partially located in the coil interior 304 defined by the armature coil 303.

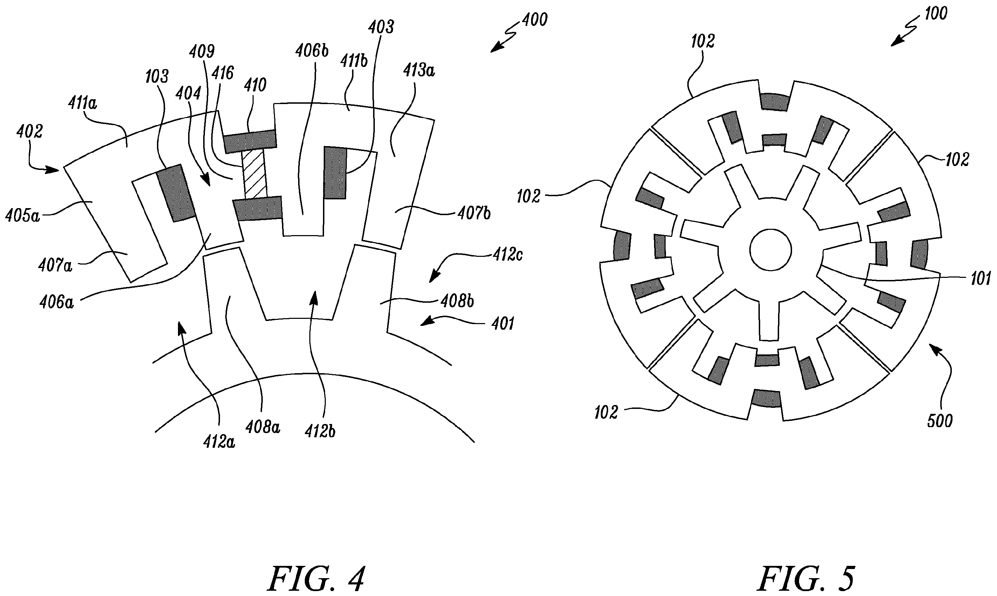

The system 400 of Figure 4, also not within the scope of the appended claims, is generally the same as that depicted in Figures 1A and 1B, except that this system 400 further comprises a permanent magnet 416 forming part of the bridge 409 (e.g. inserted into a cavity formed in the bridge 409). Thus, in the present system 400, the magnetic field is provided by both the permanent magnet 416 and the field coil 410. In this respect, the system 400 may be considered a hybrid system. This arrangement may improve the electrical efficacy of the system.

The permanent magnet 416 is aligned such that a line formed between its north and south poles is in a direction that is generally parallel to a direction of the bridge 409. That is, the north pole of the permanent magnet 416 is located towards one end of the bridge 409 and the south pole is located towards an opposing end of the bridge 409. Other arrangements of a permanent magnet or multiple permanent magnets can be used to a similar effect.

Figure 5 shows a schematic of an electromechanical system 100 comprising a segmented stator 500 comprising multiple stator segments 102 surrounding a rotor 101. The stator segments are disconnected from each other, and therefore can be removed separately from the segmented stator, allowing the rotor to be removed radially by just removing two of the stator segments, rather than having to extract the rotor axially from within a single-piece stator. It will be obvious that the segmented stator could be configured to made of any number of stator segments depending on the requirements of the system. The stator segments do not have to all be identical, such that the segmented stator can comprise a mixture of stator segments according to the present disclosure, and stator segments that are not according to the present disclosure. In some embodiments, the segmented stator can comprise two or more segments, where at least one segment is removable to allow radial access to the rotor without having to extract the rotor axially from the stator.

It will be understood that the disclosure is not limited to the embodiments above-described and various modifications and improvements can be made without departing from the concepts described herein but within the scope of the following claims. Except where mutually exclusive, any of the features may be employed separately or in combination with any other features and the disclosure extends to and includes all combinations and sub-combinations of one or more features described herein.

**Claims**

1. An electromechanical system (200) comprising a toothed rotor (201) comprising a plurality of circumferentially spaced teeth (208a, 208b); and a segmented stator (200) comprising multiple separable stator segments (202) each extending partway about the circumference of the rotor, wherein at least one of the stator segments (202) comprises:

    an armature coil (203) defining a coil interior (204);
    circumferentially adjacent first (205a) and second (205b) stator portions, each of the first and second stator portions comprising circumferentially adjacent connected inner (206a, 206b) and outer (207a, 207b) radially extending poles, each of the inner poles passing through the coil interior and each of the outer poles provided outside of the coil interior; and

    a bridge (209) connecting the first and second stator portions, the bridge comprising a magnetic field generator (210) arranged to generate a magnetic field between the stator portions, the magnetic field generator spaced radially from the coil interior,
    wherein the bridge comprises a circumferentially extending central portion (214) and outer portions (215a, 215b) that extend radially inwardly at opposing ends of the central portion so as to connect the central portion to the first and second stator portions, and
    wherein a T-shaped recess is defined between the first stator portion, the second stator portion and the bridge.

2. An electromechanical system (200) according to claim 1 wherein the magnetic field generator (210) comprises a field coil wound around at least a portion of the bridge (209).

3. An electromechanical system (200) according to claim 2 wherein the field coil (210) extends through the T-shaped recess and is wound around the central portion (214) of the bridge (209).

4. An electromechanical system (200) according to any one of the preceding claims wherein the magnetic field generator (210) comprises one or more permanent magnets.

5. An electromechanical system (200) according to claim any one of the preceding claims wherein the armature coil (203) is wound around the inner poles (206a, 206b) such that opposing ends of the armature coil are located in respective recesses defined between the inner (206a, 206b) and outer (207a, 207b) poles of each stator portion (205a, 205b).

6. An electromechanical system (200) according to any one of the preceding claims wherein the poles (206a, 206b, 207a, 207b) of the stator segment (202) are arranged such that:

    when the rotor (201) is in a first position, the inner pole (206a) of the first stator portion (205a) is aligned with a tooth (208a) of the rotor, and the inner pole (206b) of the second stator portion (205b) is aligned with an air gap defined between circumferentially adjacent teeth (208a, 208b); and
    when the rotor (201) is in a second position, the inner pole (206b) of the second stator portion (205b) is aligned with a tooth (208b) of the rotor, and the inner pole (206a) of the first stator portion (205a) is aligned with an air gap defined between circumferentially adjacent teeth.

7. An electromechanical system (200) according to claim 6 wherein the poles (206a, 206b, 207a, 207b) of the stator segment (202) are arranged such that:

when the rotor (201) is in the first position, the outer pole (207b) of the second stator portion (205b) is aligned with a tooth (208b) of the rotor, and the outer pole (207a) of the first stator portion (205a) is aligned with an air gap defined between circumferentially adjacent teeth; and when the rotor is in a second position, the outer pole (207a) of the first stator portion (205a) is aligned with a tooth (208a) of the rotor, and the outer pole (207b) of the second stator portion (205b) is aligned with an air gap defined between circumferentially adjacent teeth.

8. An electromechanical system (200) according to any one of the preceding claims that is an electrical generator.

9. A gas turbine engine comprising the electrical generator (200) of claim 8.

**Patentansprüche**

1. Elektromechanisches System (200), umfassend einen gezahnten Rotor (201), der eine Vielzahl von in Umfangsrichtung beabstandeten Zähnen (208a, 208b) umfasst; und einen segmentierten Stator (200), der vielfache trennbare Statorsegmente (202) umfasst, die sich jeweils teilweise um den Umfang des Rotors erstrecken, wobei mindestens eines der Statorsegmente (202) Folgendes umfasst:

eine Ankerspule (203), die ein Spuleninneres (204) definiert; einen ersten (205a) und einen zweiten (205b) Statorabschnitt, die in Umfangsrichtung benachbart sind, wobei jeder von dem ersten und dem zweiten Statorabschnitt einen inneren (206a, 206b) und einen äußeren (207a, 207b), sich radial erstreckenden Pol, die in Umfangsrichtung benachbart und verbunden sind, umfasst, wobei jeder von den inneren Polen durch das Spuleninnere verläuft und jeder von den äußeren Polen außerhalb des Spuleninneren bereitgestellt ist; und eine Brücke (209), die den ersten und den zweiten Statorabschnitt verbindet, wobei die Brücke einen Magnetfeldgenerator (210) umfasst, der so angeordnet ist, dass er ein Magnetfeld zwischen den Statorabschnitten erzeugt, wobei der Magnetfeldgenerator radial von dem Spuleninneren beabstandet ist, wobei die Brücke einen sich in Umfangsrichtung erstreckenden Mittelabschnitt (214) und äußere Abschnitte (215a, 215b) umfasst, die sich an gegenüberliegenden Enden des Mittelabschnitts radial nach innen erstrecken, sodass sie den Mittelabschnitt mit dem ersten und dem zweiten Statorabschnitt verbinden, und wobei eine T-förmige Aussparung zwischen dem ersten Statorabschnitt, dem zweiten Statorabschnitt und der Brücke definiert ist.

2. Elektromechanisches System (200) gemäß Anspruch 1, wobei der Magnetfeldgenerator (210) eine Feldspule umfasst, die um mindestens einen Abschnitt der Brücke (209) gewickelt ist.

3. Elektromechanisches System (200) gemäß Anspruch 2, wobei sich die Feldspule (210) durch die T-förmige Aussparung erstreckt und um den Mittelabschnitt (214) der Brücke (209) gewickelt ist.

4. Elektromechanisches System (200) gemäß einem der vorhergehenden Ansprüche, wobei der Magnetfeldgenerator (210) einen oder mehrere Permanentmagnete umfasst.

5. Elektromechanisches System (200) gemäß einem der vorhergehenden Ansprüche, wobei die Ankerspule (203) um die inneren Pole (206a, 206b) gewickelt ist, sodass sich gegenüberliegende Enden der Ankerspule in jeweiligen Aussparungen befinden, die zwischen dem inneren (206a, 206b) und dem äußeren (207a, 207b) Pol jedes Statorabschnitts (205a, 205b) definiert sind.

6. Elektromechanisches System (200) gemäß einem der vorhergehenden Ansprüche, wobei die Pole (206a, 206b, 207a, 207b) des Statorsegments (202) so angeordnet sind, dass:

wenn sich der Rotor (201) in einer ersten Position befindet, der innere Pol (206a) des ersten Statorabschnitts (205a) auf einen Zahn (208a) des Rotors ausgerichtet ist und der innere Pol (206b) des zweiten Statorabschnitts (205b) auf einen Luftspalt ausgerichtet ist, der zwischen in Umfangsrichtung benachbarten Zähnen (208a, 208b) definiert ist; und wenn sich der Rotor (201) in einer zweiten Position befindet, der innere Pol (206b) des zweiten Statorabschnitts (205b) auf einen Zahn (208b) des Rotors ausgerichtet ist und der innere Pol (206a) des ersten Statorabschnitts (205a) auf einen Luftspalt ausgerichtet ist, der zwischen in Umfangsrichtung benachbarten Zähnen definiert ist.

7. Elektromechanisches System (200) gemäß Anspruch 6, wobei die Pole (206a, 206b, 207a, 207b) des Statorsegments (202) so angeordnet sind, dass:

wenn sich der Rotor (201) in der ersten Position befindet, der äußere Pol (207b) des zweiten Statorabschnitts (205b) auf einen Zahn (208b) des Rotors ausgerichtet ist und der äußere Pol (207a) des ersten Statorabschnitts (205a) auf einen Luftspalt ausgerichtet ist, der zwischen in Umfangsrichtung benachbarten Zähnen definiert ist; und
wenn sich der Rotor in einer zweiten Position befindet, der äußere Pol (207a) des ersten Statorabschnitts (205a) auf einen Zahn (208a) des Rotors ausgerichtet ist und der äußere Pol (207b) des zweiten Statorabschnitts (205b) auf einen Luftspalt ausgerichtet ist, der zwischen in Umfangsrichtung benachbarten Zähnen definiert ist.

8. Elektromechanisches System (200) gemäß einem der vorhergehenden Ansprüche, das ein elektrischer Generator ist.

9. Gasturbinentriebwerk, umfassend den elektrischen Generator (200) nach Anspruch 8.

**Revendications**

1. Système électromécanique (200) comprenant un rotor denté (201) comprenant une pluralité de dents espacées circonférentiellement (208a, 208b) ; et un stator segmenté (200) comprenant de multiples segments séparables de stator (202), chacun s'étendant en partie autour de la circonférence du rotor, au moins l'un des segments de stator (202) comprenant :

une bobine d'induit (203) définissant un intérieur de bobine (204) ;
des première (205a) et seconde (205b) parties de stator circonférentiellement adjacentes, chacune des première et seconde parties de stator comprenant des pôles internes (206a, 206b) et externes (207a, 207b) reliés circonférentiellement adjacents s'étendant radialement, chacun des pôles internes passant à travers l'intérieur de bobine et chacun des pôles externes étant prévus à l'extérieur de l'intérieur de bobine ; et
un pont (209) reliant les première et seconde parties de stator, le pont comprenant un générateur de champ magnétique (210) agencé pour générer un champ magnétique entre les parties de stator, le générateur de champ magnétique étant espacé radialement de l'intérieur de bobine,
ledit pont comprenant une partie centrale (214) s'étendant circonférentiellement et des parties externes (215a, 215b) qui s'étendent radialement vers l'intérieur au niveau des extrémités opposées de la partie centrale de façon à relier la partie centrale aux première et seconde parties de stator, et
un évidement en forme de T étant défini entre la première partie de stator, la seconde partie de stator et le pont.

2. Système électromécanique (200) selon la revendication 1, ledit générateur de champ magnétique (210) comprenant une bobine de champ enroulée autour d'au moins une partie du pont (209).

3. Système électromécanique (200) selon la revendication 2, ladite bobine de champ (210) s'étendant à travers l'évidement en forme de T et étant enroulée autour de la partie centrale (214) du pont (209).

4. Système électromécanique (200) selon l'une quelconque des revendications précédentes, ledit générateur de champ magnétique (210) comprenant un ou plusieurs aimants permanents.

5. Système électromécanique (200) selon l'une quelconque des revendications précédentes, ladite bobine d'induit (203) étant enroulée autour des pôles internes (206a, 206b) de sorte que les extrémités opposées de la bobine d'induit soient situées dans des évidements respectifs définis entre les pôles internes (206a, 206b) et externes (207a, 207b) de chaque partie de stator (205a, 205b).

6. Système électromécanique (200) selon l'une quelconque des revendications précédentes, lesdits pôles (206a, 206b, 207a, 207b) du segment de stator (202) étant agencés de sorte que :

lorsque le rotor (201) est dans une première position, le pôle interne (206a) de la première partie de stator (205a) soit aligné avec une dent (208a) du rotor, et le pôle interne (206b) de la seconde partie de stator (205b) soit aligné avec un entrefer défini entre des dents circonférentiellement adjacentes (208a, 208b) ; et
lorsque le rotor (201) se trouve dans une seconde position, le pôle interne (206b) de la seconde partie de stator (205b) soit aligné avec une dent (208b) du rotor, et le pôle interne (206a) de la première partie de stator (205a) soit aligné avec un entrefer défini entre des dents circonférentiellement adjacentes.

7. Système électromécanique (200) selon la revendication 6, lesdits pôles (206a, 206b, 207a, 207b) du segment de stator (202) étant agencés de sorte que :

lorsque le rotor (201) est dans la première position, le pôle externe (207b) de la seconde partie de stator (205b) soit aligné avec une dent (208b) du rotor, et ledit pôle externe (207a) de la première partie de stator (205a) soit aligné avec un entrefer défini entre des dents circonférentiellement adjacentes ; et

lorsque le rotor se trouve dans une seconde position, le pôle externe (207a) de la première partie de stator (205a) soit aligné avec une dent (208a) du rotor, et le pôle externe (207b) de la seconde partie de stator (205b) soit aligné avec un entrefer défini entre des dents circonférentiellement adjacentes.

8. Système électromécanique (200) selon l'une quelconque des revendications précédentes, qui est un générateur électrique.

9. Moteur à turbine à gaz comprenant le générateur électrique (200) de la revendication 8.

*FIG. 1B*

*FIG. 1A*

FIG. 3

FIG. 2

*FIG. 4*

*FIG. 5*

EP 3 683 928 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20180152060 A1
- CN 101699713 A
- WO 2008119055 A1
- EP 0909010 A1